(19) **Europäisches Patentamt**

**European Patent Office**

**Office européen des brevets**

(11) **EP 1 657 540 A1**

(12) **EUROPEAN PATENT APPLICATION**

(43) Date of publication:
**17.05.2006 Bulletin 2006/20**

(51) Int Cl.:
*G01N 17/00* (2006.01)    *G01R 27/22* (2006.01)
*B23H 11/00* (2006.01)

(21) Application number: **05256810.2**

(22) Date of filing: **03.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **12.11.2004 JP 2004328541**

(71) Applicant: **FANUC LTD**
**Minamitsuru-gun,**
**Yamanashi 401-0597 (JP)**

(72) Inventors:
• **Kita, Yuki,**
**c/o FANUC Manshonharimomi**
**Minamitsuru-gun,**
**Yamanashi, 401-0511 (JP)**
• **Sakurai, Akihiro,**
**c/o FANUC Dai3virakaramatsu**
**Minamitsuru-gun,**
**Yamanashi, 401-0511 (JP)**

(74) Representative: **Billington, Lawrence Emlyn et al**
**Haseltine Lake,**
**Imperial House,**
**15-19 Kingsway**
**London WC2B 6UD (GB)**

(54) **Resistivity detector and resistivity detection apparatus**

(57) A resistivity detector comprises a main detector and an auxiliary detector for measuring the resistance value of a solution. Contamination of the detection elements of the main and auxiliary detectors is detected by the output signals Ew1, Ew2 of the main and auxiliary detectors. The settings are such that the contamination advance speed is made different between the detection elements of the main detector and those of the auxiliary detectors or that different resistance values can be obtained from the outputs of the main and auxiliary detectors when they measure the resistance values of the same solution in a state where the detection elements are not contaminated. If the detection elements are contaminated, the ratio of resistance values found from the main and auxiliary detectors changes, with the result that the detection elements are determined to be contaminated.

FIG. 1

**Description**

BACKGROUND OF THE INVENTION

1. Field of the invention

The present invention relates to a resistivity detector and a resistivity detection apparatus for detecting resistivity of a solution such as a machining solution used, for example, in wire discharge machining.

2. Description of the Related Art

In apparatuses for machining in machining solutions, such as wire discharge machining apparatuses, a constant resistivity of the machining solution has to be maintained in order to maintain a constant machining accuracy. For this purpose, resistivity of the machining solution is detected with a resistivity meter, the detected resistivity value is compared with a set value, and control is conducted so that the resistivity of the machining solution is maintained at the prescribed value by using an ion exchanger or the like.

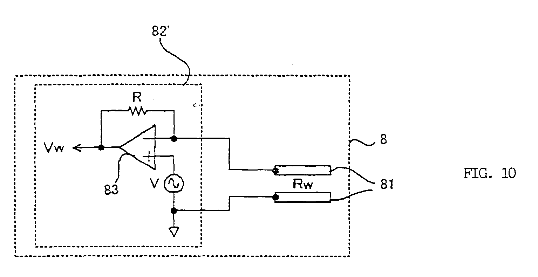

An example of the conventional resistivity detector using a direct-current power source will be explained below with reference to FIG. 9. Referring to the figure, a resistance value Rw of the solution between two detection elements 81, 81, which are the detection units of the resistivity detector, is converted into an electric signal with a conversion circuit 82. In this conversion circuit 82, a voltage is applied between the two detection elements 81, 81 from a direct-current power source E via a resistor R. The electric signal output Ew of the conversion circuit 82 is taken out based on the electric potential difference between the detection elements 81, 81. The resistance value Rw of the solution between the two detection elements can be represented as follows.

$$Rw = \{Ew/(E - Ew)\} \times R.$$

Thus, the resistance value Rw of the solution between the detection elements 81, 81 can be found by an output signal of the conversion circuit 82, and this resistance value Rw becomes the resistivity value of the solution such as a machining solution.

An example of the conventional resistivity detector using an alternating current source will be explained below with reference to FIG. 10. Referring to the figure, the resistance value Rw of the solution between two detection elements 81, 81 is converted into an electric signal by a conversion circuit 82'. This conversion circuit 82' comprises an alternating current source V and an amplifier 83.

The resistance value Rw of the solution between the two detection elements 81, 81 can be found by calculations by the following formula from the output signal Vw of the conversion circuit 82'.

$$Rw = \{V/(Vw - V)\} \times R.$$

This resistance value Rw becomes the resistivity value of the solution such as a machining solution.

In order to measure the resistivity, the detection elements of the resistivity detector are immersed in the machining solution all the time. If the resistivity detector is continuously used for a long time, contamination (e.g., scale) such as impurities present in the machining solution adhere to the surface of the detection elements. As a result, the detected value of resistivity includes the effect of the contamination adhered to the detection elements and differs from the actual resistivity of the machining solution.

Because the resistivity of the machining solution is controlled based on the detected value of the resistivity detector, even if the actual resistivity is far from the set value, this is most often not noticed till the machining is affected. For this reason, the detection elements of resistivity meters have to be periodically or constantly checked visually for contamination and cleaned to remove the adhered matter.

Because the contamination of detection elements advances in units of months or years, it can be easily forgotten that contaminants adhere to the detection elements. Furthermore, the degree of contamination varies depending on the state of machining in the discharge machining apparatus. The resultant difficulty is how to check the degree of contamination correspondingly to the machining state. Moreover, the operators often forget to check whether or not the detection elements of the detector for detecting the resistivity of the solution have been contaminated.

In particular, contamination of detection elements changes gradually over a long period, rather than changing rapidly. Moreover, in the case of a wire discharge machining apparatus, feedback control is conducted with an ion exchanger or the like so that the detected resistivity of the solution assumes the prescribed value. Therefore, it is difficult for an operator to find out that the detection elements of the detector for detecting the resistivity are contaminated and the resistivity of the machining solution is different from the detected resistivity. Furthermore, contamination of the detection elements is difficult to detect visually.

SUMMARY OF THE INVENTION

It is an object of the present invention to provide a resistivity detector in which contamination of detection elements of the detector for detecting a resistivity can be easily detected and also to provide a resistivity detection apparatus for automatically detecting the contamination.

The resistivity detector for a solution of the present invention, in accordance with the first aspect thereof, comprises a main detector and an auxiliary detector detecting different resistance values when measuring the resistance value of the same solution and contamination of the detection elements of the main detector and the detection elements of the auxiliary detector is detected based on the outputs of the main detector and the auxiliary detector.

The detectors of this aspect of the invention are so configured that the detection elements of the main detector and the detection elements of the auxiliary detector differ in the easiness of contamination adhesion thereto.

The resistivity detector for a solution of the present invention, in accordance with the second aspect thereof, comprises a main detector and an auxiliary detector, the detection elements of the main detector and the detection elements of the auxiliary detector are so configured as to differ in the easiness of contamination adhesion thereto, and contamination of the detection elements of the main detector and the detection elements of the auxiliary detector is detected based on the outputs of the main detector and the auxiliary detector.

In the detector of this embodiment, the main detector and auxiliary detector are adjusted so as to detect the same resistance value when measuring the resistance of the same solution in a state where no contamination is adhered to the detection elements thereof.

The easiness of contamination adhesion to the detection elements is made different by providing the detection elements of the main detector and the detection elements of the auxiliary detector with different surface roughness.

The easiness of contamination adhesion to the detection elements is made different by disposing the detection elements of the main detector and the detection elements of the auxiliary detector in the solution so that the flow speed of the solution in the vicinity of the detection elements of the main detector and the flow speed of the solution in the vicinity of the detection elements of the auxiliary detector differ from each other.

The easiness of contamination adhesion is made different by using alternating-current power sources for power sources of the main detector and auxiliary detector and applying a very low direct-current power between the detection elements of any one of the main detector and the auxiliary detector.

The resistivity detection apparatus of a solution in accordance with the present invention uses the above-described resistivity detector and further comprises means for finding a ratio of resistance values or a difference therebetween from the outputs of the main detector and auxiliary detector, and means for comparing the found ratio of resistance values or difference therebetween with a reference value to determine contamination of the detection elements of the main detector and the detection elements of the auxiliary detector.

The means for determining contamination of the detection elements comprises means for finding the reference value based on the ratio of the resistance value detected by the main detector and the resistance value detected by the auxiliary detector in a state where no contamination is adhered to the detection elements of the detectors, and setting and storing the found reference value.

In accordance with the present invention, contamination of the detection elements of detectors can be detected based on the output signals of the detectors, rather than by relying on visual observations. Therefore, contamination of the detection elements can be accurately detected. Furthermore, because it is not necessary to take the detection elements out of the solution, the contamination inspection operation of the detection elements is facilitated. Moreover, because contamination of the detection elements can be automatically detected in the resistivity detection apparatus, the contamination inspection operation of the detection elements is not required and the possibility of forgetting the examination is eliminated.

BRIEF DESCRIPTION OF THE DRAWINGS

The above-described and other objects and features of the present invention will be made clear from the following explanation of embodiments conducted with reference to the appended drawings, among which

FIG. 1 is a first circuit example of the resistivity detector in accordance with the present invention;
FIG. 2 is a modification example of the circuit of the resistivity detector shown in FIG. 1;

FIG. 3 is a second circuit example of the resistivity detector in accordance with the present invention;

FIG. 4 is a modification example of the circuit of the resistivity detector shown in FIG. 3;

FIG. 5 is a block-diagram illustrating a first configuration example of the resistivity detection apparatus in accordance with the present invention;

FIG. 6 is a block-diagram illustrating a second configuration example of the resistivity detection apparatus in accordance with the present invention;

FIG. 7 is a block-diagram illustrating a third configuration example of the resistivity detection apparatus in accordance with the present invention;

FIG. 8A illustrates a state where no contamination has adhered to the detection elements of the main detector and the detection elements of the auxiliary detector;

FIG. 8B explains how the resistance of solution between the detection elements changed because of adhesion of contamination to the detection elements of the main detector and the detection elements of the auxiliary detector;

FIG. 9 is a schematic circuit diagram of an example of the conventional resistivity detector using a direct-current power source as a power source; and

FIG. 10 is a schematic circuit diagram of an example of the conventional resistivity detector using an alternating current source as a power source.

DETAILED DESCRIPTION OF THE PREFERRED EMBODIMENTS

A resistivity ($\Omega \cdot$cm) of a solution can be calculated from the surface area of detection elements and the distance between the detection elements after measuring the resistance ($\Omega$) of the solution with the detection elements. Even if the measurements are conducted on the solutions with the same resistance, the resistance value obtained by the measurements differ depending on the distance between the detection elements and the surface area of the detection elements. The resistivity detector in accordance with the present invention in each embodiment thereof comprises two detectors, a main detector and an auxiliary detector, for detecting the resistance of the solution.

In the first embodiment, the detection elements of the detectors detect different resistance values when the detection elements are not contaminated, thereby enabling the detection of contamination of the detection elements. Furthermore, in the second embodiment, the adhesion degree of contamination (contamination advance rate) that adheres to the detection elements of the two detectors is made different, thereby enabling the detection of contamination of those detectors. In the third embodiment, the first embodiment and the second embodiment are combined together.

In the case of a high capacitance of the solution whose resistivity is to be detected, the resistivity sometimes differs depending on the measurement location. In wire discharge machining apparatuses, resistivity is most often adjusted by circulating the machining solution located in the machining solution tank through an ion exchanger. In this case, the resistivity in the vicinity of the machining solution inlet port is different from that in the vicinity of the outlet port.

In each embodiment of the present invention, the main detector and auxiliary detector constituting the resistivity detector are disposed close to each other in order to avoid the effect of the spread in the resistivity of solution between the locations inside the vessel containing the solution. Each embodiment of the resistivity detector in accordance with the present invention will be described below.

First Embodiment

The resistivity detector for detecting a resistivity of a solution of the present embodiment uses two detectors: a main detector and an auxiliary detector which detect mutually different resistance values when measuring the resistance value of the same solution.

Here, the resistance value of solution between the detection elements of the main detector (referred to hereinbelow as "main detection elements") in a state where no contamination has adhered to the main detection elements will be denoted by R0, (1)

and the resistance of solution between the detection elements of the auxiliary detector (referred to hereinbelow as "auxiliary detection elements") in a state where no contamination has adhered to the auxiliary detection elements will be denoted by R0/$\chi$ (2)

On the other hand, when contamination has adhered to both the main detection elements and the auxiliary detection elements, the resistance of contamination that adhered to each detection element will be denoted as Rd.

As a result, the resistance value Rmd of solution between the main detection elements in the case where contamination has adhered to the main detection elements will be

$$Rmd = R0 + Rd \qquad\qquad \dots (3)$$

and the resistance value of solution between the auxiliary detection elements in the case where contamination has adhered to the auxiliary detection elements will be

$$Rsd = R0/\chi + Rd. \qquad \dots (4)$$

Here, the ratio of the resistance value of solution between the main detection elements to the resistance value of solution between the auxiliary detection elements in the case where no contamination has adhered to the main detection elements and auxiliary detection elements can be represented as follows from the formulas (1) and (2) shown above:

$$(R0/\chi)/R0 = 1/\chi \qquad \dots (5)$$

On the other hand, the ratio Rsd/Rmd of the resistance value Rsd of solution between the auxiliary detection elements to the resistance value Rmd of solution between the main detection elements in the case where contamination has adhered to the main detection elements and auxiliary detection elements can be represented as follows from formulas (3) and (4) shown above:

$$Rsd/Rmd = \{(R0/\chi + Rd)/(R0 + Rd)$$

$$= \{(R0/\chi) + (Rd/\chi) + (-Rd/\chi) + Rd\}/(R0 + Rd)$$

$$= 1/\chi + \{(1 - (1/\chi)) \times \{Rd/(R0 + Rd)\} \qquad \dots (6)$$

Formula (6) demonstrates that the ratio Rsd/Rmd of the resistance value Rsd detected with the auxiliary detector to the resistance value Rmd detected with the main detector when both the main detection elements and the auxiliary detection elements have been contaminated increases by $\{(1 - (1/\chi)) \times \{Rd/(R0 + Rd)\}$ over the ratio $1/\chi$ of the resistance value detected with the auxiliary detector to the resistance value detected with the main detector when neither the main detection elements nor the auxiliary detection elements have been contaminated. Therefore, the adhesion of contamination to the detection elements can be monitored by detecting whether or not the ratio of the resistance value detected by the main detector to the resistance value detected by the auxiliary detector has shifted from $1/\chi$.

Furthermore, $\{(1 - (1/\chi)) \times \{Rd/(R0 + Rd)\}$, which is the second term in the right side of Formula (6), becomes zero when $\chi = 1$ and contamination of the detectors cannot be distinguished, but the absolute value of this term increases with the decrease of $\chi$ below 1 or increase thereof above 1. As a result, Rsd/Rmd of formula (6) becomes significantly different from $1/\chi$ of formula (5) and, therefore, contamination of the detection elements can be easily detected.

Second Embodiment

If the main detection elements and auxiliary detection elements are immersed in the same solution and disposed close to each other, those main detection elements and auxiliary detection elements will be located in the same environment. Therefore, the contamination adhesion degree of both groups of elements will be the same. For this reason, in the above-described first embodiment, the configuration was used in which, as described above, the detected resistance values of the two, main and auxiliary, detectors was different in a state where no contamination has adhered to the detection elements ($\chi \neq 1$).

By contrast, in the second embodiment, the configuration is such that when no contamination has adhered to the main detection elements and auxiliary detection elements, the detected resistance value in the main detector and the detected resistance value in the auxiliary detector are the same ($\chi = 1$) and the easiness of contamination adhesion to the main detection elements (contamination advance rate) and the easiness of contamination adhesion the auxiliary detection elements (contamination advance rate) are different.

The higher is the surface roughness of an article, the easier is the adhesion of contamination. For this reason, in the present embodiment, the main detection elements and the auxiliary detection elements are configured to have different surface roughness.

Furthermore, adhesion of contamination to the detector also depends on the speed of solution flow around the detector. Contamination such as scale tends to adhere easier when the speed of solution flow is high. Accordingly, when the detector is disposed in a zone where the solution flow is present, a coating for relaxing the solution flow is provided on any one group of the main detection elements and auxiliary detection elements, thereby creating a difference between the speed of solution flow around the main detection elements and the speed of solution flow around the auxiliary detection elements and providing a difference in the degree of contamination adhesion between the main detection elements and auxiliary detection elements.

Here, the resistance value of solution between the main detection elements when the main detection elements have not been contaminated and the resistance value of solution between the auxiliary detection elements when the auxiliary detection elements have not been contaminated are considered to be equal and are denoted by R0.　　　(7)

On the other hand, when contamination has adhered to the main detection elements and auxiliary detection elements,

the resistance value of contamination that adhered to the main detection elements will be denoted by Rd,　　　(8)

and the resistance value of contamination that adhered to the auxiliary detection elements will be denoted by Rd'.　　　(9)

Furthermore, in the present embodiment, as described hereinabove, the condition Rd ≠ Rd' is obtained by causing the degree of contamination adhesion (contamination advance speed) to the main detection elements to be different from the degree of contamination adhesion (contamination advance speed) to the auxiliary detection elements or by creating a difference between the speed of solution flow around the main detection elements and the speed of solution flow around the auxiliary detection elements.

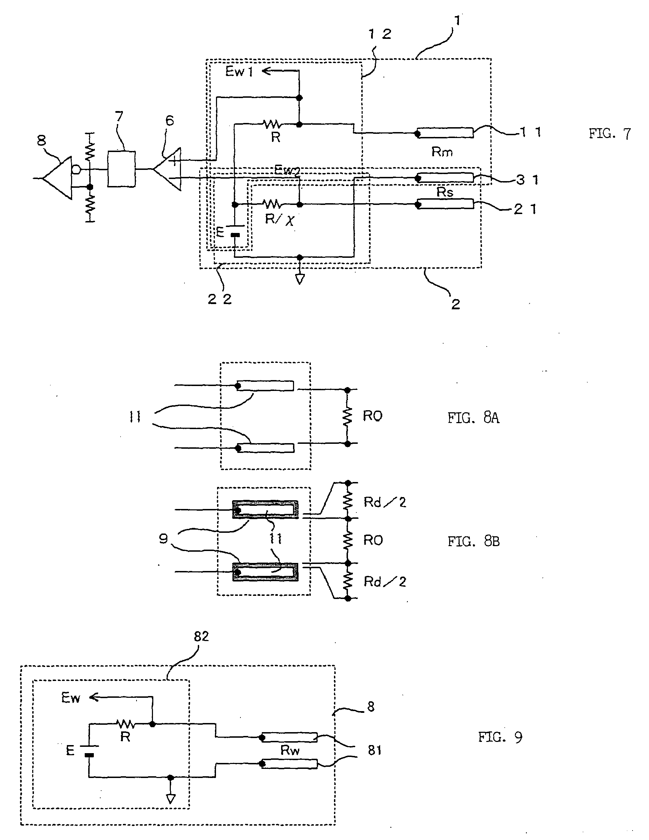

FIG. 8A shows that in a state where no contamination has adhered to both main detection elements 11, 11, the resistance value of solution between one detection element 11 and the other detection element 11 is R0. On the other hand, FIG. 8B shows that in a state where contamination has adhered to both main detection elements 11, 11, the resistance value of one detection element 11 and the resistance value of the other detection element 11 increase by Rd/2 each and, consequently, the resistance value of solution between one detection element 11 and the other detection element 11 becomes R0 + Rd.

Similarly, in a state where no contamination has adhered to the auxiliary detection elements, the resistance value of solution between the auxiliary detection elements is R0 and when contamination has adhered to the auxiliary detection elements, the resistance value of one auxiliary detection element and the resistance value of the other detection element increase by Rd'/2 each. As a result, the resistance of solution between the auxiliary detection elements becomes R0 + Rd'.

Thus, when contamination has adhered to the main detection elements and auxiliary detection elements, the resistance value Rmd' of solution between the main detection elements is

$$Rmd' = R0 + Rd, \qquad \ldots (10)$$

and the resistance value Rsd' of solution between the auxiliary detection elements is

$$Rsd' = R0 + Rd. \quad \ldots (11)$$

Here, if

$$Rd' = \alpha \times Rd, \qquad \ldots (12)$$

(where $\alpha \neq 1$), then formula (11) will be as follows.

$$Rsd' = R0 + \alpha \times Rd$$

$$= R0 + Rd + (\alpha - 1) \times Rd$$

$$= Rmd' + (\alpha - 1) \times Rd \qquad \dots (13)$$

Thus, as described hereinabove, the difference between the resistance value of solution between the main detection elements in a state where no contamination has adhered to the main detection elements and the resistance value of solution between the auxiliary detection elements in a state where no contamination has adhered to the auxiliary detection elements will be zero (R0 - R0 = 0) and the ratio thereof will be 1 (R0/R0 = 1), but the difference (Rmd' - Rsd') between the resistance value of solution between the main detection elements in a state where contamination has adhered to the main detection elements and the resistance value of solution between the auxiliary detection elements in a state where no contamination has adhered to the auxiliary detection elements will be $(\alpha - 1) \times Rd$ and the (Rsd'/Rmd') ratio will be $\{Rmd' + (\alpha - 1) \times Rd\}/Rmd' = 1 + (\alpha - 1) \times Rd/Rmd'$, as follows from formula (13) presented hereinabove.

Therefore, in the present embodiment, the adhesion of contamination to the detection elements can be found by monitoring whether or not the relationship Rsd'/Rmd' = 1 is valid between the Rmd' of formula (10) and Rsd' of formula (11) or whether or not the relationship Rmd' - Rsd' = 0 is valid. Third Embodiment

This embodiment is equivalent to a combination of the above-described first embodiment and second embodiment.

In this embodiment, the resistance value of machining solution between the auxiliary detection elements is made different from the resistance value of machining solution between the main detection elements when no contamination has adhered to the main detection elements or auxiliary detection elements in the case where the main detector and auxiliary detector are immersed in the same solution. Furthermore, the configuration is such that the easiness of contamination adhesion to the auxiliary detection elements (contamination advance rate) differs from the easiness of contamination adhesion to the main detection elements (contamination advance rate).

Here, in a state where no contamination has adhered to the main detection elements and auxiliary detection elements,

the resistance value of solution between the main detection elements is taken as R0, (14)

and the resistance value of solution between the auxiliary detection elements is taken as $R0/\chi$ ($\chi \neq 1$), (15)

On the other hand, when contamination has adhered to the resistivity detector,

if the resistance value of contamination that adhered to the main detection elements is taken as Rd, (16)

and the resistance value of contamination that adhered to the auxiliary detection elements is taken as $\alpha \times Rd$ ($\alpha \neq 1$),

(17) then, when contamination has adhered to both the main detection elements and the auxiliary detection elements, the resistance value Rmd" of solution between the main detection elements to which contamination has adhered will be

$$Rmd" = R0 + Rd \qquad \dots (18)$$

and the resistance value Rsd" of solution between the auxiliary detection elements to which contamination has adhered will be (from formulas (15) and (17))

$$Rsd" = (R0/\chi) + \alpha \times Rd. \qquad \dots (19)$$

Here, the ratio of the resistance value of solution between the main detection elements to the resistance value of solution between the auxiliary detection elements in the case where no contamination has adhered to the main detection elements and auxiliary detection elements can be represented as follows from formulas (14) and (15) presented hereinabove:

$$(R0/\chi)/R0 = 1/\chi \qquad \dots (20)$$

On the other hand, the ratio Rsd"/Rmd" of the resistance value Rsd" of the solution between the auxiliary detection elements to the resistance value Rmd" of the solution between the main detection elements in the case where contamination has adhered to the main detection elements and auxiliary detection elements can be represented as follows from formulas (18) and (19) presented hereinabove:

$$\text{Rsd"/Rmd"} = \{(R0/\chi) + \alpha \times Rd\}/(R0 + Rd)$$

$$= \{(R0/\chi) + (Rd/\chi) + (-Rd/\chi) + \alpha Rd\}/(R0 + Rd)$$

$$= 1/\chi + \{(\alpha - (1/\chi)) \times \{Rd/(R0 + Rd)\} \quad \ldots \ (21)$$

Comparison of formulas (6) and (21) demonstrates that formula (6) can be obtained from formula (21) by taking $\alpha = 1$ therein. Here, for example, if a difference in easiness of contamination adhesion is provided between the main detection elements and auxiliary detection elements so that $\alpha > 1$ at $\chi \geq 1$, then the following relationship will be obtained from formulas (6) and (21)

$$\text{Rsd/Rmd} < \text{Rsd"/Rmd"} \qquad\qquad \ldots \ (22)$$

and it is clear that the variation of the ratio of resistance values can be increased and can be detected easier.

For example, if a difference in surface roughness of detection elements is provided so that $\alpha > 1$ when $\chi > 1$ and so that $\alpha < 1$ when $\chi < 1$, then the variation of ratio of resistance values increases and can be easily detected. However, when $\alpha = 1/\chi$, the expression $\{(\alpha - (1/\chi)) \times \{Rd/(R0 + Rd)\}$, which is the second term in the right side of formula (21), becomes zero, Rsd"/Rmd" = $1/\chi$, and even when contamination adheres, it cannot be detected. However, no problem arises if $\chi$ and $\alpha$ are selected so that $\alpha \neq 1/\chi$. Example of Circuit Constituting Resistivity Detector of First Embodiment

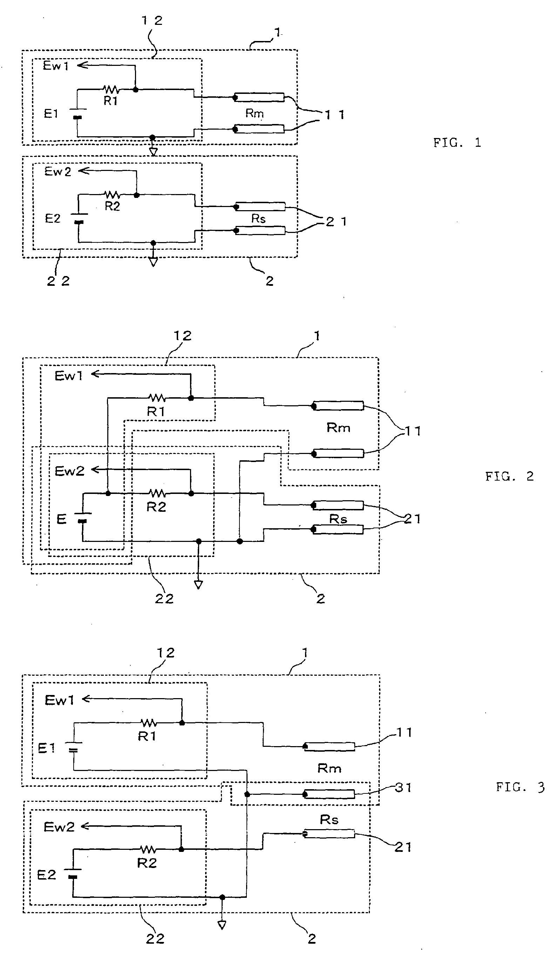

First and second examples (and modification examples thereof) of the circuit constituting the resistivity detector of the first embodiment of the present invention will be described below by using FIGS. 1 to 4.

The first example of the circuit constituting the resistivity detector is shown in FIG. 1. In this circuit, there are provided two detectors: a main detector 1 and an auxiliary detector 2. The main detector 1 comprises two detection elements (main detection elements) 11, 11 and a conversion circuit 12 for converting the resistance value of solution between the two detection elements 11, 11 into an electric signal. The conversion circuit 12 comprises a direct-current power source E1, a resistor R1, and an output terminal and applies a voltage between the two detection elements 11, 11 via the resistor R1. Furthermore the difference in potential between the two detection elements 11, 11 is taken out as an output electric signal Ew1.

Similarly, the auxiliary detector 2 also comprises two detection elements (auxiliary detection elements) 21, 21 and a conversion circuit 22 for converting the resistance value of solution between the two detection elements 21, 21 into an electric signal. The conversion circuit 22 comprises a direct-current power source E2, a resistor R2, and an output terminal and applies a voltage between the two detection elements 21, 21 via the resistor R2. Furthermore, the difference in potential between the two detection elements 21, 21 is taken out as an output electric signal Ew2.

If the resistance value of solution between the detection elements 11, 11 of the main detector 1 is denoted by Rm and the resistance value of solution between the detection elements 21, 21 of the auxiliary detector 2 is denoted by Rs, the outputs Ew1, Ew2 from each detector 1, 2 will be as follows:

$$\text{Ew1} = \text{E1} \times \text{Rm}/(R1 + Rm) \qquad\qquad \ldots \ (23)$$

$$\text{Ew2} = \text{E2} \times \text{Rs}/(R2 + Rs) \qquad\qquad \ldots \ (24)$$

Because the resistances R1, R2 and power source voltages E1, E2 are already known values, the resistance values Rm, Rs can be found from the outputs Ew1, Ew2 from the detectors 1, 2 by the formulas (23) and (24). Whether or not contamination has adhered to the detection elements 11, 11, 21, 21 can be determined by the ratio (Rs/Rm) or difference (Rm - Rs) of the found resistance values Rm and Rs.

In the above-described first embodiment, a state where no contamination is present on the detection elements 11, 11, 21, 21 of the main and auxiliary detectors 1, 2, the ratio of the resistance value (R0/χ) of solution between a pair of detection elements 21, 21 of the auxiliary detector 2 and the resistance value R0 of solution between a pair of detection elements 11, 11 of the main detector 1 is 1/χ.

As described above, in a state where no contamination has adhered to the detection elements 11, 11, 21, 21, as shown by formula (5), the ratio of the resistance value (R0/χ) of solution between a pair of detection elements 21, 21 of the auxiliary detector 2 and the resistance value R0 of solution between a pair of detection elements 11, 11 of the main detector 1 is 1/χ, but after contamination, such as scale, has adhered, this ratio assumes a value different from 1/χ, as shown in formula (6). For example, if we take that χ > 1, then this ratio will assume a value larger than 1/χ. As apparent from formula (6), the higher is the resistance value Rd of contamination that adhered to the detection elements, the larger is the value of Rs/Rm, which is the ratio of the resistance value of solution between the main detection elements 11, 11 and the resistance value of solution between the auxiliary detection elements 21, 21. Once this value becomes equal to or larger than the prescribed value, the detection elements 11, 11, 21, 21 are determined to be contaminated and have to be cleaned.

Thus, because the resistance value of solution between the detection elements can be found from the outputs Ew1, Ew2 from the detectors 1, 2 and the degree of contamination of the detection elements can be detected from the detected resistance value, the degree of contamination can be detected more accurately than in the case where the degree of contamination is detected by visual observations as in the conventional methods. Furthermore, because the degree of contamination can be detected without removing the detection elements from the solution, the detection element management operation is facilitated.

Furthermore, in a state where no contamination has adhered to the detection elements 11, 11, 21, 21 of the main and auxiliary detectors 1, 2, the voltages of power sources E1, E2 are assumed to be the same, one of the resistors R1, R2 of the conversion circuits 12, 22 is adjusted and the outputs Ew1, Ew2 of the main and auxiliary detectors 1, 2 are adjusted so as to output electric signals of the same level. If the difference between the outputs Ew1, Ew2 of the main and auxiliary detectors 1, 2 becomes equal to or higher than the prescribed value, contamination is assumed to have adhered to the detection elements 11, 11, 21, 21 and should be cleaned.

Furthermore, as shown in FIG. 2, the power source voltage (E1, E2 in FIG. 1) of the main and auxiliary detectors 1, 2 can be made a common voltage (power source voltage E).

The second example of the circuit constituting the resistivity detector is shown in FIG. 3. In this circuit, one of the two detection elements of the main detector 1 and one of the two detection elements of the auxiliary detector 2 are made common (detection element 31). As a result, in this resistivity detector, there are provided a total of three detection elements: a detection element 11 of the main detector 1, a detection element 21 of the auxiliary detector 2, and the common detection element 31. As a result, the detection elements of the main detector 1 are constituted by a pair of the detection element 11 and detection element 31, and the detection elements of the auxiliary detector 2 are constituted by a pair of the detection element 21 and detection element 31. Furthermore, in a state where no contamination has adhered to the detection elements 11, 31, 21, the resistance value of solution between the detection elements 11, 31 of the main detector 1 is denoted by R0, and the resistance value of the solution between the detection elements 21, 31 of the auxiliary detector 2 is denoted by R0/χ. In other aspects the circuit is identical to that shown in FIG. 1.

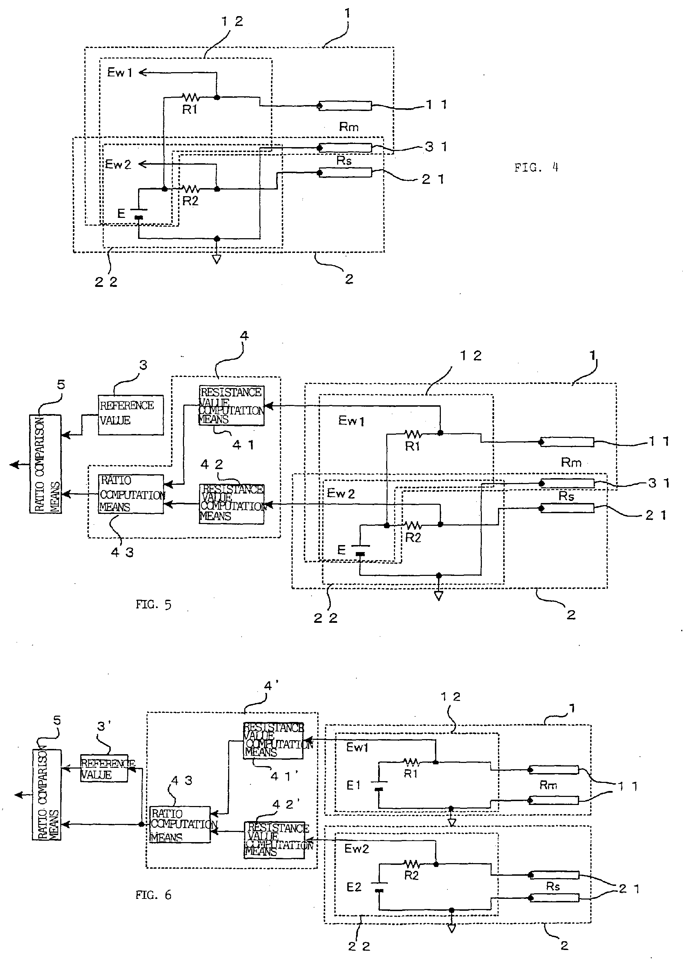

As shown in FIG. 4, the power source voltage of the main and auxiliary detectors 1, 2 also may be made common. Examples of Resistivity Detection Apparatus Using the Resistivity Detector of the First Embodiment

First to third configuration examples of the resistivity detection apparatus using the resistivity detector of the first embodiment of the present invention will be described below by using block diagrams shown in FIG. 5 to FIG. 7.

A first configuration example of the resistivity detection apparatus is shown in FIG. 5. This resistivity detection apparatus automatically detects contamination of detection elements by using the resistivity detector comprising the circuit shown in FIG. 4. In this resistivity detection apparatus, the outputs Ew1, Ew2 from the detectors 1, 2 of the resistivity detector are inputted respectively into resistance value computation means 41, 42 provided in means 4 for finding the ratio of resistance values and the resistance values Rm, Rs of solutions between the detection elements of detectors 1, 2 are found by conducting computation by formulas (25), (26) presented below with those resistance value computation means 41, 42.

$$Rm = Ew1 \times R1/(E - Ew1) \qquad \ldots (25)$$

$$Rs = Ew2 \times R2/(E - Ew2) \qquad \dots (26)$$

The ratio (Rs/Rm) of the resistance values Rm, Rs found with the resistance value computation means 41, 42 is found with ratio commutation means 43. As described above initially (at a stage where contamination of the detection elements has not yet started), the Rm = R0 and Rs = R0/$\chi$ settings are made and then Rs/Rm = 1/$\chi$ is outputted. However, if the detection elements are contaminated, the ratio (Rs/Rm) becomes different from 1/$\chi$, as described above. Accordingly, the ratio of the output (Rs/Rm) of the ratio computation means 43 and the set value (reference value) 3 that was set and stored in advance are compared with ratio comparison means 5 and a signal indicating that the detection elements have been contaminated is outputted when the set value (reference value) is exceeded. Contamination of the detection elements is thus automatically detected.

The second configuration example of the resistivity detection apparatus is shown in FIG. 6. In the configuration shown in FIG. 6, the resistivity detector comprising the circuit shown in FIG. 1 is used. Furthermore, a method for setting a reference value differs from that used in the resistivity detection apparatus with the configuration shown in FIG. 5, and the computation formulas of the resistance value computation means 41', 42' in means 4' for finding the ratio of resistance values are different. The configurations of ratio computation means 43 and ratio comparison means 5 are the same.

In the resistivity detection apparatus shown in FIG. 6, the resistance value computation means 41', 42' find the resistance values Rm, Rs of solutions between the detection elements of detectors 1, 2 by conducting computation by formulas (27), (28) presented below.

$$Rm = Ew1 \times R1/(E1 - Ew1) \qquad \dots (27)$$

$$Rs = Ew2 \times R2/(E2 - Ew2) \qquad \dots (28)$$

The ratio (Rs/Rm) of those resistance values is then computed by the ratio computation means 43. The output of the ratio computation means 43 is inputted into means 3' for setting and storing the reference value and into the ratio comparison means 5. When the resistivity detection apparatus is first used, contamination has not yet adhered to the detection elements and a ratio Rs/Rm = 1/$\chi$ of the resistance values detected by the main and auxiliary detectors is outputted from the ratio computation means 43. In the means 3' for setting and storing the reference value, this outputted value is appropriately corrected and set and stored as the reference value. Then, this reference value and the ratio (Rs/Rm) of the resistance values outputted from the ratio computation means 43 are compared in the ratio comparison means 5, and if the output of the ratio computation means 43 exceeds the reference value, a signal indicating that the detection elements have been contaminated is outputted.

Furthermore, in the resistivity detection apparatus of the configuration shown in FIG. 6, the resistivity detector shown in any figure of FIGS. 2 to 4 can be used instead of the resistivity detector shown in FIG. 1. In the resistivity detection apparatus shown in FIG. 5, the resistivity detector shown in any figure of FIGS. 1 to 3 can be used instead of the resistivity detector with the circuit shown in FIG. 4.

The third configuration example of the resistivity detection apparatus is shown in FIG. 7. In the resistivity detection apparatus of this configuration, the circuit shown in any of FIGS. 1 to 4 may be used for the resistivity detector employed therein. FIG. 7 shows an example where the circuit shown in FIG. 4 is used. The resistance of the conversion circuit 12 of the main detector 1 is denoted by R and the resistance of the conversion circuit 22 of the auxiliary detector 2 is denoted by R/$\chi$. Furthermore, the outputs Ew1, Ew2 of the main and auxiliary detectors 1, 2 are inputted in a differential amplifier, and the output of the differential amplifier 6 is inputted in a comparator 8 via an absolute value circuit 7 to inform automatically about contamination of the detection elements.

In a state where contamination has adhered to the detection elements 11, 31, 21, the resistance value of solution between the detection elements 11, 31 of the main detector 1 is denoted by R0 and the resistance value of solution between the detection elements 21, 31 of the auxiliary detector 2 is denoted by R0/$\chi$.

The outputs of the main detector 1 and auxiliary detector 2 at this time become as follows:

$$Ew1 = E \times R0/(R + R0), \qquad \dots (29)$$

$$Ew2 = E \times (R0/\chi)/\{(R/\chi) + (R0/\chi)\}$$

$$= E \times R0/(R + R0), \qquad\qquad \dots (30)$$

and electric signals of the same level are outputted. At this time, the output of the differential amplifier 6 is 0 V and the output of the absolute value circuit 7 is also 0 V. The reference value of the comparator 8 is set to be slightly higher than 0 V so that the output of the comparator 8 at this time assumes a high level. If the detection elements 11, 31, 21 are contaminated and the resistance value of solution between the detection elements changes as described hereinabove, the output Ew1 of the main detector 1 differs from the output Ew2 of the auxiliary detector 2. If the output level of the absolute value circuit 7 exceeds the reference value, the output of the comparator 8 assumes a low level, automatically informing that the detection elements are contaminated. In the resistivity detection apparatus shown in FIG. 7, the resistivity detector with a circuit shown in any figure of FIGS. 1 to 3 can be used instead of the resistivity detector with the circuit shown in FIG. 4.

In this example of resistivity detection apparatus, in the case where the power sources of the main and auxiliary detectors are independent when the resistivity detection apparatus is initially used, the power source E1 of the main detector and the power source E2 of the auxiliary detector may be taken to have the same voltage, a configuration may he formed such that the ratio Rs/Rm of the resistance value of solution between the detection elements of the main detector to the resistance value of solution between the detection elements of the auxiliary detector becomes $1/\chi$, the resistance of the conversion circuit 22 of the auxiliary detector 2 may be adjusted with respect to the resistance value R of the conversion circuit 12 of the main detector 1 (conversely, the resistance value of the comparison circuit of the main detector may be adjusted with reference to the resistance of the auxiliary detector), and the outputs Ew1, Ew2 of the main and auxiliary detectors 1, 2 may be set to be identical.

Several examples of resistivity detectors capable of detecting contamination of detection elements when the ratio of resistance values of solutions between pairs of detection elements in the main and auxiliary detectors was taken as $1/\chi$ in a state where no contamination has adhered to the detection elements of the main detector 1 and auxiliary detector 2 and of resistivity detection apparatuses which automatically detect contamination of detection elements by using the resistivity detectors were explained above as the first embodiment.

Examples of Resistivity Detector of the Second Embodiment and Resistivity Detection Apparatus Using the Resistivity Detector

A circuit example of the resistivity detector of the second embodiment of the present invention and a configuration example of the resistivity detection apparatus using the resistivity detector will be explained below.

The resistivity detector of the second embodiment and the resistivity detection apparatus are also configured of the circuits shown in FIGS. 1 to 7 and resistivity detector comprising the two, main and auxiliary, detectors 1, 2, those detectors being different in terms of the easiness of contamination adhesion (contamination advance rate) to detection elements. In the second embodiment, in a state where contamination has not adhered to the detection elements, the resistance value of solution between the detection element 11 and detection element 11 of the main detector 1 or between the detection element 11 and the common detection element 31 and the resistance value of solution between the detection element 21 and detection element 21 of the auxiliary detector 2 or between the detection element 21 and the common detection element 31 are considered to be identical.

In this case, as shown by formula (13), if the detection elements are contaminated, the resistance values of solutions between the detection elements of the main and auxiliary detectors assume different values. Therefore, in the circuits shown in FIGS. 1 to 4, the ratio of resistance values computed from the outputs Ew1, Ew2 of the main and auxiliary detectors 1, 2 differs from that in the case where the detection elements have not been contaminated. Accordingly, the detection elements are considered to be contaminated and requiring cleaning when this ratio exceeds the prescribed value.

In the circuit examples of the resistivity detector shown in FIGS. 1 to 4, in the case where the power sources of the main and auxiliary detectors are independent, if the power source E1 of the main detector and the power source E2 of the auxiliary detector are taken to have the same voltage and the resistors R1, R2 of the conversion circuits 12, 22 of the main and auxiliary detectors 1, 2 are taken to have the same resistance value, then in a state where the detectors are not contaminated, the outputs Ew1, Ew2 of the main and auxiliary detectors 1, 2 will be identical, but if contamination of the detection elements advances, they assume different values. Monitoring this difference makes it possible to determine that the detection elements are contaminated and have to be cleaned when the ratio of the outputs Ew1, Ew2 of the main and auxiliary detectors 1, 2 or the difference therebetween exceeds the prescribed value.

Each configuration example of the resistivity detection apparatus for automatically detecting contamination of detection elements shown in FIGS. 5 to 7 can be directly employed in the second embodiment. Therefore, the explanation thereof is herein omitted.

In the third example of the resistivity detection apparatus shown in FIG. 7 in a state of employment thereof in the second embodiment, the resistance value of the conversion circuit 22 of the auxiliary detector 2 may be equal to the resistance value of the conversion circuit 12 of the main detector 1.

Examples of Resistivity Detector of the Third Embodiment and Resistivity Detection Apparatus Using the Resistivity Detector

A circuit example of the resistivity detector of the third embodiment of the present invention and a configuration example of the resistivity detection apparatus using the resistivity detector will be explained below.

Similarly to the resistivity detector of the second embodiment, the resistivity detector of the third embodiment is so configured as to have different easiness of contamination adhesion (contamination advance rate) to the detection elements of the main and auxiliary detectors 1, 2 of the resistivity detector. Furthermore, similarly to the resistivity detector of the first embodiment, in a state where the detection elements are not contaminated, the ratio of the resistance value detected with the auxiliary detector to the resistance value detected with the main detector is $1/\chi$ ($\chi \neq 1$), the resistance value of solution between the main detection elements is R0, and the resistance value of solution between the auxiliary detection elements is R0/$\chi$.

In the resistivity detector of the third embodiment, in a state where the detection elements are not contaminated, the ratio of the resistance value of the auxiliary detector and the resistance value of the main detector is $1/\chi$, but if the detection elements are contaminated, as shown in formula (21), this ratio changes to a value different from $1/\chi$. If the respective difference or ratio exceeds a reference value, the detector will detect the contamination of the detector.

In the resistivity detectors of the above-described embodiments, a direct-current constant-voltage power source was used. However, besides the direct-current constant-voltage power source, there are a direct-current constant-current power source, an alternating-current constant-voltage power source, and an alternating-current constant-current power source, and any such power source may be used in the present invention. If a direct-current voltage is continuously applied to the resistivity detectors immersed always in machining solution, contaminants such as metal hydroxides generated by electric discharge machining might be adsorbed by the detection elements. For this reason, usually a system is used in which an average voltage applied to the detection elements is 0 V, e.g., a system using an alternating-current power source. In this case, the difference in the degree of contamination can be provided by applying a very low direct-current voltage to one detection element. Therefore, with this method a difference may be provided between the degree of contamination (contamination advance rate) of the detection elements.

**Claims**

1. A resistivity detector for a solution comprising:

   a main detector and an auxiliary detector detecting different resistance values when measuring the resistance value of the same solution, wherein
   contamination of detection elements of the main detector and detection elements of the auxiliary detector is detected based on the outputs of said main detector and auxiliary detector.

2. A resistivity detector for a solution comprising:

   a main detector and an auxiliary detector so configured that the detection elements of the main detector and the detection elements of the auxiliary detector differ in the easiness of contamination adhesion thereto, wherein
   contamination of detection elements of the main detector and detection elements of the auxiliary detector is detected based on the outputs of said main detector and auxiliary detector.

3. The resistivity detector according to claim 2, wherein
   said main detector and auxiliary detector are adjusted so as to detect the same resistance value when measuring the resistance value of the same solution in a state where no contamination is adhered to the detection elements thereof.

4. The resistivity detector according to claim 1, wherein the detection elements of said main detector and the detection elements of said auxiliary detector are configured to differ in the easiness of contamination adhesion thereto.

5. The resistivity detector according to claim 2, wherein the easiness of contamination adhesion to the detection elements is made different by providing the detection elements of said main detector and the detection elements of said auxiliary detector with different surface roughness.

6. The resistivity detector according to claim 2, wherein the easiness of contamination adhesion to the detection elements is made different by disposing the detection elements of the main detector and the detection elements of the auxiliary detector in the solution so that the flow speed of the solution in the vicinity of the detection elements of said main detector and the flow speed of the solution in the vicinity of the detection elements of said auxiliary detector differ from each other.

7. The resistivity detector according to claim 2, wherein the easiness of contamination adhesion is made different by using alternating-current power sources for power sources of the main detector and auxiliary detector and applying a very low direct-current power between the detection elements of any one of the main detector and the auxiliary detector.

8. The resistivity detector according to claim 1 or 2, wherein the power source of said main detector and the power source of said auxiliary detector are direct-current power sources.

9. The resistivity detector according to claim 1 or 2, wherein the power source of said main detector and the power source of said auxiliary detector are alternating-current power sources.

10. The resistivity detector according to claim 1 or 2, wherein the power source of said main detector and the power source of said auxiliary detector are constant-voltage power sources.

11. The resistivity detector according to claim 1 or 2, wherein the power source of said main detector and the power source of said auxiliary detector are constant-current power sources.

12. The resistivity detector according to claim 1 or 2, wherein a total of three detection elements form a set in which one of the two detection elements of the main detector and one of the two detection elements of the auxiliary detector are made common.

13. An resistivity detection apparatus which uses the resistivity detector according to claim 1 or 2, and comprises:

    means for finding a ratio of resistance values or a difference therebetween from the outputs of the main detector and auxiliary detector; and
    means for comparing the found ratio of resistance values or difference therebetween with a reference value to determine contamination of the detection elements of the main detector and the detection elements of the auxiliary detector.

14. The resistivity detection apparatus according to claim 13, wherein
    said means for determining contamination of the detection elements comprises means for finding said reference value based on the ratio of the resistance value detected by the main detector and the resistance value detected by the auxiliary detector in a state where no contamination is adhered to the detection elements of the detectors, and setting and storing the found reference value.

FIG. 1

FIG. 2

FIG. 3

FIG. 4

FIG. 5

FIG. 6

FIG. 7

FIG. 8A

FIG. 8B

FIG. 9

FIG. 10

**European Patent Office**

**EUROPEAN SEARCH REPORT**

Application Number

EP 05 25 6810

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/108911 A1 (XIONG KUN ET AL) 15 August 2002 (2002-08-15) | 2,3,13 | G01N17/00 G01R27/22 B23H11/00 |
| A | * paragraphs [0021], [0025], [0026], [0030], [0032], [0035], [0039] * ----- | 1,4-12, 14 | |
| A | WO 83/00390 A (REPCO LIMITED) 3 February 1983 (1983-02-03) * page 4, line 13 - page 6, line 25; figures 1,2 * ----- | 1-14 | |
| A | US 5 828 027 A (GOTO ET AL) 27 October 1998 (1998-10-27) * abstract * ----- | 1,2 | |
| A | US 4 118 663 A (BARBEN, II ET AL) 3 October 1978 (1978-10-03) * column 1, lines 6-43 * * column 3, line 51 - column 4, line 59; figure 1 * * abstract * ----- | 1,2,8-11 | |
| A | US 3 953 790 A (EBLING ET AL) 27 April 1976 (1976-04-27) * abstract * ----- | 1,2,12 | TECHNICAL FIELDS SEARCHED (IPC) G01N G01R B23H |

The present search report has been drawn up for all claims

| Place of search | Date of completion of the search | Examiner |
|---|---|---|
| Munich | 10 January 2006 | Filipas, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 25 6810

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2006

| Patent document cited in search report | | Publication date | Patent family member(s) | | Publication date |
|---|---|---|---|---|---|
| US 2002108911 | A1 | 15-08-2002 | NONE | | |
| WO 8300390 | A | 03-02-1983 | AU | 8647482 A | 27-01-1983 |
| | | | EP | 0084036 A1 | 27-07-1983 |
| | | | IT | 1232602 B | 28-02-1992 |
| US 5828027 | A | 27-10-1998 | US | 5603852 A | 18-02-1997 |
| | | | US | 5698115 A | 16-12-1997 |
| | | | US | 5681488 A | 28-10-1997 |
| | | | US | 5919381 A | 06-07-1999 |
| | | | US | 5869797 A | 09-02-1999 |
| US 4118663 | A | 03-10-1978 | NONE | | |
| US 3953790 | A | 27-04-1976 | CA | 1021401 A1 | 22-11-1977 |

EPO FORM P0459

For more details about this annex : see Official Journal of the European Patent Office, No. 12/82